# EUROPÄISCHE PATENTSCHRIFT

(11) **EP 1 946 641 B1**
(45) Veröffentlichungstag und Bekanntmachung des Hinweises auf die Patenterteilung: **17.03.2010**
(21) Anmeldenummer: 08000863.4
(22) Anmeldetag: 17.01.2008
(51) Int. Cl.: A22C 17/00, B02C 18/36

(54) **Lochscheibe mit integriertem Schneidennutsystem**
Breaker plate with integrated cutting nut system
Disque perforé doté d'un système de rainure de coupe intégré

(30) Priorität: 18.01.2007 DE 102007002803
(43) Veröffentlichungstag der Anmeldung: 23.07.2008
(73) Patentinhaber: Haack, Eberhard, 06108 Halle (DE); Haack, Oliver, 06108 Halle (DE)
(72) Erfinder: Haack, Eberhard, 06108 Halle (DE); Haack, Oliver, 06108 Halle (DE)
(74) Vertreter: Manitz, Finsterwald & Partner GbR

(56) Entgegenhaltungen:
- EP-A- 1 886 730
- DE-A1- 2 344 284
- DE-A1- 4 400 312
- DE-C- 801 685
- US-A- 4 422 582
- US-A- 5 597 352

## Beschreibung

Die vorliegende Erfindung betrifft einen Schneidsatz mit zumindest einem Messer-Lochscheibensystem zum Zerkleinern von biologischen Rohstoffen, insbesondere zum Einsatz in Wolfmaschinen für die Herstellung von Fleisch- und Wurstwaren o. dgl.

Naturrohstoffe sind häufig inhomogen und besitzen weiche und feste Stoffanteile, die sich bezüglich ihrer Zerkleinerungs -und Abflusseigenschaften bedeutend unterscheiden.

Es sind Festigkeitsunterschiede bis zum Einhundertfachen bekannt.

Dadurch kommt es bei der stofflichen Bearbeitung in Maschinen, die mit Lochscheiben und Messersystemen arbeiten, zu völlig verschiedenen Verweilzeiten im Arbeitsraum, sowie zu Störungen der Funktion der Arbeitsorgane.

Die weicheren Stoffanteile fließen früher ab und es steigt die Konzentration der festen Teile an, die sich sonst unzerkleinert als Geschiebe vor dem Messer stauen und die Bohrungen der Lochscheibe zusetzen.

Die Zerkleinerung von Rohstoffen in Messer-Lochscheibensystemen erfolgt nach dem Prinzip der tiefziehenden Verformung des Materials in die Bohrungen hinein und anschließendem Trennschnitt mit dem Messer.

Daher läuft der stoffliche Ausformungsvorgang der Rohstoffarten als Zapfen in die Bohrungen der Scheibe hinein, in Abhängigkeit von Rohstoffart und Größe unterschiedlich ab.

Daraus ergeben sich schwankende Drücke und Stoffverweilzeiten im Messerraum.

Es folgen Schwingungen und Verformungen der Scheibe, d.h. Messer und Scheibe heben zeitweilig voneinander ab.

Vor dem Messer bilden sich nach und nach Stoffanhäufungen fester Stoffanteile, die sowohl Bohrungen zusetzen als auch den Verformungsdruck auf die Scheibe steigern.

Damit bildet die höhere Strukturfestigkeit der Stoffarten die Ursache dafür, dass sich Rohrstoff zwischen Messer und Lochscheibenfläche schieben kann, sich eine Schicht bildet und die Schneidfunktion zwischen Messer und Lochscheibe aufhebt.

Ein Schneidsatz der eingangs angegebenen Art ist aus der deutschen Offenlegungsschrift 23 44 284 bekannt. Dabei sind in die Lochscheiben längliche Vertiefungen von etwa nuten-, rillen- oder dreikantförmigem Querschnitt eingearbeitet, die dazu dienen, die Lochscheibenoberfläche von harten Bestandteilen des Schneidgutes frei zu machen, welche aufgrund ihrer Größe nicht in die Bohrungen der Lochscheibe gelangen können. Die Vertiefungen, die sich entweder ganz oder zumindest über die Hälfte der Radialabmessung der Lochfläche erstrecken, haben die Aufgabe, Ausschleuswege für die erwähnten festen Rohstoffanteile, wie beispielsweise Sehnen, Knorpel o. dgl., zu bilden, die zu einer Abführvorrichtung geleitet werden. Hier werden die störenden festen Stoffanteile aus dem Zerkleinerungsproduktstrom ausgesondert, und es soll durch die Beseitigung dieser störenden Stoffanteile eine Qualitätsaufwertung des Ausgangsrohstoffs erreicht werden.

Der Erfindung liegt die Aufgabe zugrunde, die Funktionssicherheit und die Leistungsfähigkeit derartiger Schneidsätze zu verbessern bzw. zu steigern und zu erreichen, dass die festen, schwergängigen Rohstoffteile nicht ausgeschleust werden müssen, sondern im Zerkleinerungsprozess kontinuierlich ohne Störfunktion mit verarbeitet werden, indem diese Teile zusätzlichen Bearbeitungen unterworfen werden.

Gelöst wird diese Aufgabe im Wesentlichen dadurch, dass zumindest im zuströmseitigen Bereich der gebohrten Arbeitsfläche von Lochscheiben einerseits im Außenbereich der Arbeitsfläche eine erste Gruppe und andererseits im Zentrumsbereich der Arbeitsfläche eine zweite Gruppe von umfangsmäßig über die Arbeitsfläche verteilten Schneidkammern vorgesehen sind, und
dass diese bodenseitig geschlossenen Schneidkammern derart orientiert und gestaltet sind, dass der von Ihnen aufgenommene Rohstoff im Zusammenwirken mit dem zugehörigen Messer jeweils zum Mittelbereich der gelochten Arbeitsfläche und damit erneut in den Hauptschneideprozess zurückgefördert wird.

Von besonderer Bedeutung ist es somit im Rahmen der Erfindung, dass die Schneidkammern bezogen auf die gebohrte Arbeitsfläche der jeweiligen Lochscheibe gezielt im radial äußeren Bereich einerseits und im radial inneren Bereich andererseits so angeordnet sind, dass sie den Rohstoff immer wieder in den Hauptschneidprozess zurückfördern.

Die Schneidkammern, welche feste Rohstoffanteile des zu zerkleinernden Materials aufnehmen, die sich während des Schneidvorgangs vor den Messern anhäufen, stellen auch ein Zusatzschneidsystem dar, wobei die umlaufenden Messer durch Förderstromschub partiell Stoffmengen entnehmen und diese an der Oberkante der Schneidkammern durchschneiden. Die in der Folge entstehenden Größenreduzierungen führen schlussendlich zu besseren bzw. zu gleichen Schneidbedingungen, wie sie bei weicheren Stoffen vorliegen. Diese wiederholten Schneidvorgänge, denen gerade die festen Rohstoffanteile ausgesetzt werden, sind deshalb besonders wirksam und häufig, weil die erfindungsgemäße Anordnung und Ausgestaltung der Schneidkammern sicherstellt, dass diese kritischen Rohstoffanteile sowohl vom radial äußeren Bereich als auch vom radial inneren Bereich der gelochten Arbeitsfläche immer wieder in den zwischen diesem radial äußeren Bereich und dem radial inneren Bereich gelegenen Mittelbereich der Lochscheibenoberfläche zurückgeführt werden. Damit sind weitere kontinuierliche Schneidvorgänge in die Lochscheibe integriert, die unabhängig und zusätzlich zu den Lochscheibenbohrungen wirken.

Die Schneidnutkanten der Schneidkammern sind Bestandteil der Arbeitsfläche der Lochscheibe und wirken mit dieser zusammen.

Die stoffliche Anhäufung kann in Schneidkammern, die in die Fläche der Lochscheibe eingebracht sind, aufgenommen werden.

Die gegenüber den Bohrungen größere Fläche der Schneidkammern bildet die Grundlage für die bessere Aufnahme hochfester Stoffe.

Damit bleibt die Oberfläche der Lochscheibe sauber und ohne Verschmierungen und Schichtbildung.

Die festen Bestandteile des zu zerkleinernden Rohstoffs werden schrittweise durch die Rotation der Messer an den Schneidkanten der Kammern zerkleinert und dem Prozess auf der Scheibenoberfläche erneut zugeführt.

Die Zwischenzerkleinerung bei gleichzeitiger Größenreduktion unter die Größe der weicheren Teile führt zu einer wesentlichen Verbesserung der Abflusseigenschaften dieser festen Stoffarten.

Damit laufen für alle Stoffarten gleichmäßige Zerkleinerungsvorgänge auf der Lochscheibenoberfläche ab.

Durch die Größe der sacklochartigen Schneidkammern lässt sich das Zeit- und Leistungsregime der Rohstoffzerkleinerung beeinflussen.

Die Verringerung der Teilegröße verbessert die Abfließfähigkeit der festen, gemeinsam mit den weichen Stoffkomponenten.

Mit einem gestuften, standardmäßigen Scheibenpaket ist das nicht möglich, weil alle Stoffanteile gleichen Zerkleinerungsbedingungen unterliegen.

Die Stoffanhäufung, die sich vor den Messern aufbaut, wird in den Schneidkammern unter der Ebene der Bohrungsfläche aufgenommen.

So entfällt mit der Stoffaufnahme in den Schneidkammern die Verstopfung der Lochscheibenfläche, das Abheben des Messers von der Scheibe und letztendlich die sonst folgende Funktionsstörung.

Durch die räumliche Gestaltung der Schneidkammern mit rohstoffanhebender Geometrie und die dadurch entstehenden Schneidkanten erfolgt mit dem Messerumlauf die Zerkleinerung sowie der ständige Stoffwechsel.

Mit dem Trennschnitt an den Kammerkanten reduziert sich die Teilegröße der schwer schneidbaren festen Stoffe.

Die Zuführung in die Arbeitsfläche der Lochscheibe führt zur gleichmäßigen Verarbeitung durch die Größenreduzierung und verbessert die Abfließ- und Verformungsfähigkeit des Materials über die Bohrungen der Lochscheibe.

Das trägt zur kontinuierlichen Bearbeitung aller Stoffe bei.

Der partielle Zerkleinerungsvorgang wiederholt sich durch den Messerumlauf so lange, bis der abfließfähige Zerkleinerungsgrad erreicht ist.

Weitere vorteilhafte Ausgestaltungen der Erfindung ergeben sich aus den nachfolgenden Ansprüchen und den Zeichnungen, in denen ein Ausführungsbeispiel dargestellt ist.

In den Zeichnungen zeigen:
- Fig. 1: ein Ausführungsbeispiel einer Lochscheibe mit integriertem Schneidennutsystem,
- Fig. 2: eine Schnittdarstellung von Fig. 1 durch eine Schneidkammer, und
- Fig. 3: Ausführungsvarianten der Schneidkammern, die sowohl einseitig oder beidseitig angeordnet sein können.

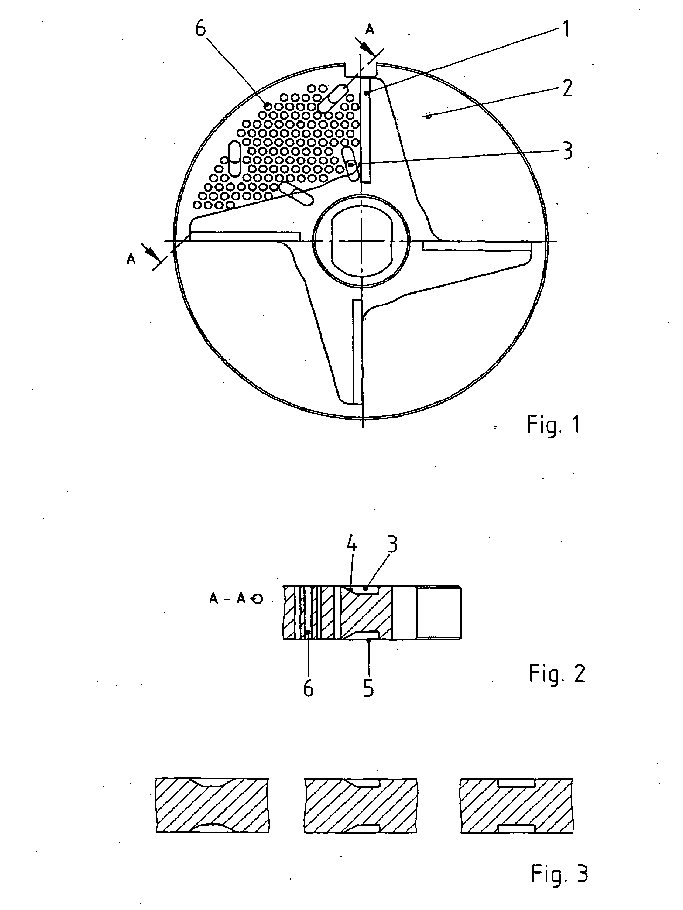

Fig. 1 zeigt einen aus einem Schneidmesser 1 mit radial verlaufenden Schneidkanten und einer Lochscheibe 2 gebildeten Schneidsatz. Die Lochscheibe 2 ist mit einer Vielzahl von Bohrungen 6 versehen, welche die Arbeitsfläche der Lochscheibe 2 bilden. Im radialen Außenbereich einerseits und im radial inneren Bereich der Lochscheibe 2 andererseits, sind über die Umfangsrichtung verteilt mit gegenseitigem Abstand Schneidkammern 3 vorgesehen, die sich unter der Arbeitsflächenoberkante befinden und einen Aufnahmeraum für feste Rohstoffanteile bilden, die aufgrund ihrer Größe und/oder Konsistenz nicht ohne Weiteres in die Bohrungen 6 der Lochscheibe eintreten können. Die Schneidkammern 3 sind im gezeigten Beispiel als geradlinige Nuten ausgebildet, deren Längsachse unterschiedliche Winkel zu den Radien bzw. den Schneidkanten des Messers 1 einnehmen.

Die Schnittansicht entsprechend der Linie A-A von Fig. 1 zeigt neben den Bohrungen 6 auf beiden Seiten der Lochscheibe vorgesehene Schneidkammern 3 mit einer Hebekontur 4. Durch die Messerrotation wird im Zusammenwirken mit den Hebekonturen 4 und den Schneidkanten 5 jeweils ein zusätzlicher Schneidvorgang erzeugt, der sich so lange wiederholt, bis der Rohstoff durch die Bohrungen 6 abflussfähig ist. Die Hebekontur 4 besteht aus an einem Ende der Schneidkammer 3 auslaufenden, hebenden Schrägen 4, die einen Rohstoffaustrag nach einem Trennschnitt mit dem Messer an den Kanten 5 unterstützen.

Fig. 3 zeigt sich in der Geometrie unterscheidende Ausführungsvarianten der sowohl einseitig als auch beidseitig vorsehbaren Schneidkammern.

Der Austrag von Rohstoff aus der jeweiligen Schneidkammer entsteht stets aus der umlaufenden Messerstellung zur Schneidkammergeometrie und der Anordnung auf der Lochscheibe 2. Die überstehenden Rohstoffteile werden durch die resultierende Schub-Schneidwirkung der Messer 1 und die Förderung des Rohstoffs zum Mittelbereich der Arbeitsfläche wiederholt erneut in den Zerkleinerungsvorgang eingeschleust, wodurch sich die aufgabengemäß angestrebte Wirkung ergibt und eine vollständige Zerkleinerung des zugeführten Stoffes ohne das Erfordernis von Stoffabfuhr aus dem Bereich des Zusammenwirkens eines Messers und einer Lochscheibe ergibt.

## Patentansprüche

1. Schneidsatz mit zumindest einem Messer-Lochscheibensystem zum Zerkleinern von biologischen Rohstoffen, insbesondere zum Einsatz in Wolfmaschinen für die Herstellung von Fleisch- und Wurstwaren o. dgl.,
**dadurch gekennzeichnet,**
**dass** zumindest im zuströmseitigen Bereich der gebohrten Arbeitsfläche von Lochscheiben (2) einerseits im Außenbereich der Arbeitsfläche eine erste Gruppe und andererseits im Zentrumsbereich der Arbeitsfläche eine zweite Gruppe von umfangsmäßig über die Arbeitsfläche verteilten Schneidkammern (3) vorgesehen sind, und
**dass** diese bodenseitig geschlossenen Schneidkammern (3) derart orientiert und gestaltet sind, dass der von Ihnen aufgenommene Rohstoff im Zusammenwirken mit dem zugehörigen Messer (1) jeweils zum Mittelbereich der gelochten Arbeitsfläche und damit erneut in den Hauptschneideprozess zurückgefördert wird.

2. Schneidsatz nach Anspruch 1,
**dadurch gekennzeichnet,**
**dass** die Längsachsen beider Gruppen von Schneidkammern (3) zumindest zum Teil unterschiedliche Winkelstellungen zu den Schneidkanten des zugehörigen Messers (1) einnehmen.

3. Schneidsatz nach Anspruch 2,
**dadurch gekennzeichnet,**
**dass** die Schneidkammern (3) als Geradnuten ausgeführt sind und die unterschiedlichen Winkel zwischen der Längserstreckung dieser Geradnuten und den vorzugsweise in Radialrichtung verlaufenden Messern (1) im Bereich von 0° bis 90°, insbesondere im Bereich von 10 bis 80° liegen.

4. Schneidsatz nach einem der vorhergehenden Ansprüche,
**dadurch gekennzeichnet,**
**dass** jede Schneidkammer (3) bodenseitig eine ansteigende Flächenschräge (4) aufweist, die jeweils in Richtung des Mittelbereichs der gelochten Arbeitsfläche ansteigt.

5. Schneidsatz nach einem der vorhergehenden Ansprüche,
**dadurch gekennzeichnet,**
**dass** der gegenseitige Abstand der Schneidkammern (3) in Umfangsrichtung im Außenbereich der gebohrten Arbeitsfläche der Lochscheibe (2) größer ist als im Zentrumsbereich.

6. Schneidsatz nach einem der vorhergehenden Ansprüche,
**dadurch gekennzeichnet,**
**dass** die Länge der Schneidkammern (3) bildenden Nuten größer ist als der Durchmesser der durchgehenden Bohrungen (6) der Lochscheibe (2).

7. Schneidsatz nach einem der vorhergehenden Ansprüche,
**dadurch gekennzeichnet,**
**dass** die Schneidkammern (3) bildenden Nuten mit den umlaufenden Messern (1) zusammenwirkende Schneidkanten (5) aufweisen.

8. Schneidsatz nach Anspruch 7,
**dadurch gekennzeichnet,**
**dass** die Schneidkanten (5) zumindest von den einander gegenüberliegenden Längskanten der Nuten gebildet sind.

9. Schneidsatz nach einem oder mehreren der vorhergehenden Ansprüche,
**dadurch gekennzeichnet,**
**dass** die geometrische Form und/oder Abmessungen der die Schneidkammern (3) bildenden Vertiefungen in Abhängigkeit von der zu verarbeitenden Stoffart gewählt sind.

10. Schneidsatz nach Anspruch 1,
**dadurch gekennzeichnet,**
**dass** Schneidkammern (3) auf beiden Seiten der Lochscheibe (2) vorgesehen sind.

11. Schneidsatz nach Anspruch 10,
**dadurch gekennzeichnet,**
**dass** die auf einander gegenüberliegenden Seiten einer Lochscheibe (2) vorgesehenen, den Rohstoff zum Mittelbereich der gelochten Arbeitsfläche fördernden Schneidkammern (3) in ihrer geometrischen Form und/oder ihren Abmessungen und/oder ihrer Orientierung unterschiedlich ausgeführt sind.

## Claims

1. A cutting set having at least one blade/breaker plate system for the comminution of biological raw materials, in particular for use in mincing machines for the manufacture of meat and sausage products or the like,
**characterised in that**
a first group of cutting chambers (3) distributed peripherally over the working surface in the outer region of the working surface, on the one hand, and a second group of cutting chambers (3) distributed peripherally over the working surface in the centre region of the working surface, on the other hand, are provided in at least the inflow region of the drilled working surface of breaker plates (2); and
**in that** these cutting chambers (3) closed at the base side are oriented and designed such that the raw material taken up by them is conveyed back in each case to the centre region of the perforated working surface in cooperation with the associated blade (1) and thus back into the main cutting process again.

2. A cutting set in accordance with claim 1, **characterised in that** the longitudinal axes of both groups of cutting chambers (3) adopt at least in part different angular positions with respect to the cutting edges of the associated blade (1).

3. A cutting set in accordance with claim 2, **characterised in that** the cutting chambers (3) are made as straight grooves and the different angles between the longitudinal extent of these straight grooves and the blades (1) preferably extending in the radial direction lie in the range from 0° to 90°, in particular in the range from 10 to 80°.

4. A cutting set in accordance with any one of the preceding claims, **characterised in that** every cutting chamber (3) has a rising surface slope (4) at the base side which in each case rises in the direction of the centre region of the perforated working surface.

5. A cutting set in accordance with any one of the preceding claims, **characterised in that** the mutual spacing of the cutting chambers (3) is larger in the peripheral direction in the outer region of the drilled working surface of the breaker plate (2) than in the centre region.

6. A cutting set in accordance with any one of the preceding claims, **characterised in that** the length of the grooves forming cutting chambers (3) is larger than the diameter of the throughgoing bores (6) of the breaker plate (2).

7. A cutting set in accordance with any one of the preceding claims, **characterised in that** the grooves forming cutting chambers (3) have cutting edges (5) cooperating with the circulating blades (1).

8. A cutting set in accordance with claim 7, **characterised in that** the cutting edges (5) are formed by at least the mutually oppositely disposed longitudinal edges of the grooves.

9. A cutting set in accordance with one or more of the preceding claims, **characterised in that** the geometrical shape and/or dimensions of the recesses forming the cutting chambers (3) are selected in dependence on the type of material to be processed.

10. A cutting set in accordance with claim 1, **characterised in that** cutting chambers are provided at both sides of the breaker plate (2).

11. A cutting set in accordance with claim 10, **characterised in that** the cutting chambers (3) provided at mutually oppositely disposed sides of a breaker plate (2) and conveying the raw material to the centre region of the perforated working surface are designed differently in their geometrical shape and/or in their dimensions and/or in their orientation.

## Revendications

1. Outil de coupe comprenant au moins un système couteau/disque à trous pour broyer des matières premières biologiques, en particulier pour l'emploi dans des hachoirs pour la production de produits carnés et de charcuterie ou similaires,
**caractérisé en ce que**, au moins dans la zone côté afflux de la surface de travail percée du disque à trous (2), il est prévu d'une part dans la région extérieure de la surface de travail un premier groupe de chambres de coupe (3) réparties en sens périphérique sur la surface de travail et il est prévu d'autre part dans la région centrale de la surface de travail un second groupe de chambres de coupe (3) réparties en sens périphérique sur la surface de travail, et
**en ce que** ces chambres de coupe (3) fermées du côté du fond sont orientées et conçues de telle façon que la matière première reçue par elles-mêmes est renvoyée respectivement vers la région médiane de la surface de travail trouée et ainsi à nouveau dans le processus de coupe principale en coopération avec le couteau (1) associé.

2. Outil de coupe selon la revendication 1,
**caractérisé en ce que** les axes longitudinaux des deux groupes de chambres de coupe (3) occupent au moins en partie des positions angulaires différentes par rapport aux arêtes de coupe du couteau (1) associé.

3. Outil de coupe selon la revendication 2,
**caractérisé en ce que** les chambres de coupe (3) sont réalisées sous forme de rainures rectilignes, et les angles différents entre l'extension longitudinale de ces rainures rectilignes et les couteaux (1), qui s'étendent de préférence en direction radiale, sont dans la plage de 0° à 90°, en particulier dans la plage de 10 à 80°.

4. Outil de coupe selon l'une des revendications précédentes,
**caractérisé en ce que** chaque chambre de coupe (3) comporte le côté du fond une surface en pente montante (4) qui monte respectivement en direction de la région médiane de la surface de travail trouée.

5. Outil de coupe selon l'une des revendications précédentes,
**caractérisé en ce que** la distance réciproque des chambres de coupe (3) en direction périphérique est plus grande dans la région extérieure de la surface de travail trouée de la plaque à trous (2) que dans la région centrale.

6. Outil de coupe selon l'une des revendications précédentes,
**caractérisé en ce que** la longueur des rainures formant les chambres de coupe (3) est supérieure au diamètre des perçages traversants (6) de la plaque à trous (2).

7. Outil de coupe selon l'une des revendications précédentes,
**caractérisé en ce que** les rainures formant les chambres de coupe comportent des arêtes de couple (5) coopérant avec les couteaux (1) en rotation.

8. Outil de coupe selon la revendication 7,
**caractérisé en ce que** les arêtes de coupe (5) sont formées au moins par les arêtes longitudinales mutuellement opposées des rainures.

9. Outil de coupe selon l'une ou plusieurs des revendications précédentes,
**caractérisé en ce que** la forme géométrique et/ou les dimensions des renfoncements formant les chambres de coupe (3) est/sont choisie(s) en fonction du type de matériau à traiter.

10. Outil de coupe selon la revendication 1,
**caractérisé en ce que** les chambres de coupe (3) sont prévues sur les deux côtés de la plaque à trous (2).

11. Outil de coupe selon la revendication 10,
**caractérisé en ce que** les chambres de coupe (3) prévues sur les côtés mutuellement opposés d'une plaque à trous (2) et convoyant la matière première vers la région médiane de la surface de travail trouée sont réalisées de manière différente quant à leur forme géométrique et/ou leurs dimensions et/ou leur orientation.
